# EUROPÄISCHE PATENTSCHRIFT

(11) **EP 2 556 904 B1**
(45) Veröffentlichungstag und Bekanntmachung des Hinweises auf die Patenterteilung: **25.05.2016**
(21) Anmeldenummer: 12180178.1
(22) Anmeldetag: 10.08.2012
(51) Int. Cl.: B21D 51/16, G05B 19/418, G06Q 10/06

(54) **Effektive Produktionslinie für Aerosoldosen**
Effective production line for aerosol cans
Ligne de production efficace pour doses d'aérosol

(30) Priorität: 10.08.2011 DE 102011080769
(43) Veröffentlichungstag der Anmeldung: 13.02.2013
(73) Patentinhaber: Mall + Herlan GMBH, 76327 Pfinztal (DE)
(72) Erfinder: Linden, Johannes, 76337 Waldbronn (DE); Ullmann, Bernd, 76327 Pfinztal (DE)
(74) Vertreter: Eisenführ Speiser

(56) Entgegenhaltungen:
- WO-A1-01/84468
- WO-A1-93/15957
- DE-A1-102006 048 345
- JP-A- H0 620 898
- US-A- 5 930 156
- US-A1- 2004 123 441

## Beschreibung

Die Erfindung betrifft eine Produktionslinie mit Bearbeitungsstationen, die Produkte mit einer Produktionsgeschwindigkeit Produkte/Zeiteinheit bearbeiten, wobei die Produktionslinie eine zeitweise diskontinuierlich arbeitende Bearbeitungsstation, einen dieser Bearbeitungsstation vorgeschalteten Produktionslinienabschnitt sowie einen dieser Bearbeitungsstation nachgeschalteten Produktionslinienabschnitt aufweist.

Produktionslinien der genannten Art sind aus dem Stand der Technik bekannt und kommen beispielweise bei der Herstellung und/oder Bearbeitung von Behältern, wie Aerosoldosen, Getränkedosen oder Tuben zum Einsatz.

Übliche Produktionsgeschwindigkeiten derartiger Produktionslinien liegen zwischen 50 bis 2500 Behälter/Minute (im Folgenden mit cpm benannt), wobei Produktionsgeschwindigkeiten größer 500 cpm typischerweise bei der Massenherstellung von Getränkedosen, Produktionsgeschwindigkeiten kleiner 100 cpm bei der Herstellung von Sonderbehältern wie Aluminiumtuben anzutreffen sind. Produktionslinien für die Herstellung von Aerosoldosen sind auf eine Produktionsgeschwindigkeit zwischen 100 cpm und 500 cpm, insbesondere zwischen 150 cpm und 250 cpm, ausgelegt.

Die herzustellenden Behälter sind typischerweise in sogenannten "Batches" zusammengefasst, wobei ein Batch die Anzahl von Behältern definiert, die eine zeitweise diskontinuierlich arbeitende Bearbeitungsstation zwischen zwei Umrüstungen dieser Bearbeitungsstation bearbeitet. Bei der Aerosoldosenherstellung beträgt die Batchgröße typischerweise 10000 bis 100000 Behälter.

Für die Dauer einer Umrüstung, wobei die Umrüstung beispielsweise ein Dekorwechsel einer Dekorations-Station ist, steht neben der umzurüstenden Bearbeitungsstation selbst, auch der ihr vorgeschaltete bzw. der ihr nachgeschaltete Produktionslinienabschnitt still.

Um die durch einen derartigen Stillstand begründete Verringerung der Produktivität zu kompensieren, wird eine zeitweise diskontinuierlich arbeitende Bearbeitungsstation und die ihr vorgeschalteten bzw. nachgeschalteten Produktionslinienabschnitte auf eine Produktionsgeschwindigkeit ausgelegt, die üblicherweise deutlich höher ist, als eine Produktionsgeschwindigkeit einer Produktionslinie ohne Umrüstungsbedarf.

Die Erfindung schließt die Erkenntnis ein, dass beim Stand der Technik infolge der Auslegung der gesamten Produktionslinie auf eine höhere Produktionsgeschwindigkeit, die Kosten dieser Produktionslinie unverhältnismäßig hoch sind.

Die Druckschrift US 2004/123441 A1 offenbart eine Produktionslinie, die Bearbeitungsstation sowie einen der Bearbeitungsstation vorgeschalteten Produktionslinienabschnitt und einen und der Bearbeitungsstation nachgeschalteten Produktionslinienabschnitt aufweist, wobei zwischen dem vorgeschalteten Produktionslinienabschnitt und der Bearbeitungsstation ein erster Produkt-Puffer und zwischen der Bearbeitungsstation und dem nachgeschalteten Produktionslinienabschnitt ein zweiter Produkt-Puffer vorgesehen ist, und wobei die Produktionslinie mit einer Steuerung verbunden ist.

Der vorliegenden Erfindung liegt die Aufgabe zugrunde, einer Produktionslinie mit einer zeitweise diskontinuierlich arbeitenden Bearbeitungsstation zur Verfügung zu stellen, die eine hohe Produktivität mit möglichst geringem Aufwand erzielt.

Diese Aufgabe wird durch eine Produktionslinie dadurch gelöst, dass die Steuerung die Produktionslinie so steuert, dass die zeitweise diskontinuierlich arbeitende Bearbeitungsstation nach einer Produktionsunterbrechung dieser Bearbeitungsstation solange mit einer gegenüber dem vorgeschalteten und dem nachgeschalteten Produktionslinienabschnitt erhöhten Produktionsgeschwindigkeit arbeitet, bis der zunächst gefüllte erste Produkt-Puffer bis auf ein vorgegebenes Maß geleert ist und/oder der zunächst geleerte zweite Produkt-Puffer auf ein vorgegebenes Maß gefüllt ist.

Bei der erfindungsgemäßen Produktionslinie können der vorgeschaltete Produktionslinienabschnitt und der nachgeschaltete Produktionslinienabschnitt im Falle einer Produktionsunterbrechung der zeitweise diskontinuierlich arbeitenden Bearbeitungsstation solange weiter produzieren, bis der zunächst geleerte erste Produkt-Puffer auf ein vorgegebenes Maß gefüllt ist und/oder der zunächst gefüllte zweite Produkt-Puffer bis auf ein vorgegebenes Maß geleert ist, so dass der vorgeschaltete Produktionslinienabschnitt und der nachgeschaltete Produktionslinienabschnitt eine geringere Produktionsgeschwindigkeit haben können, als vergleichbare Produktionslinienabschnitte beim Stand der Technik, ohne dass dadurch die Produktionsgeschwindigkeit der gesamten Produktionslinie geringer ist.

Die erfindungsgemäße Lösung schließt die Erkenntnis ein, dass bisherige produktionsverbessernde Maßnahmen auf eine Erhöhung der Fertigungsgeschwindigkeit an sich gerichtet sind. Auch wurde erkannt, dass eine höhere Produktionsgeschwindigkeit mit einer höheren Ausschussquote einher geht, was wiederum eine effektive Verminderung der Produktivität bedeutet. Eine deutliche Qualitätssteigerung der hergestellten Produkte wird dadurch erreicht, dass die die maximalen Produktionsgeschwindigkeit nur einer Bearbeitungsstation - der zeitweise diskontinuierlich arbeitenden Bearbeitungsstation - erhöht wird und die maximale Produktionsgeschwindigkeit der vorgeschalteten bzw. nachgeschalteten Produktionslinienabschnitte begrenzt werden.

Mit diskontinuierlich ist in diesem Zusammenhang gemeint, dass die zeitweise diskontinuierlich arbeitende Bearbeitungsstation zeitweise nicht mit ihrer eigentlichen Produktionsgeschwindigkeit arbeitet, sondern dass deren Produktion teilweise unterbrochen ist, wobei die Unterbrechung nicht mit eine abrupten Änderung der Produktionsgeschwindigkeit beispielsweise zwischen Stillstand (bei einer Produktionsunterbrechung) und erhöhter Produktionsgeschwindigkeit einher gehen muss. Vielmehr ist mit einer diskontinuierlichen Arbeitsweise auch gemeint, dass der Übergang der Produktionsgeschwindigkeit vom Stillstand zu einer anderen Produktionsgeschwindigkeit ohne Geschwindigkeitssprünge erfolgen kann.

Die erfindungsgemäße Lösung kann durch weitere vorteilhafte Ausgestaltungen ergänzt werden. Einige solcher Ausgestaltungen sind im Folgenden beschrieben.

In einer besonders bevorzugten Ausgestaltung ist die zeitweise diskontinuierlich arbeitende Bearbeitungsstation eine Deko-Station zum Dekorieren eines Produktes mit einer jeweils austauschbaren Dekoration. Das Austauschen der Dekoration erfordert eine Umrüstzeit, die eine entsprechende Produktionsunterbrechung der Deko-Station zur Folge hat. Die Produktions-Puffer besitzen eine Pufferkapazität, die jeweils derart auf die Produktionsgeschwindigkeit des vorgeschalteten Produktionslinienabschnitts und/oder des nachgeschalteten Produktionslinienabschnitts abgestimmt ist, dass eine bei dieser Produktionsgeschwindigkeit zum Füllen des ersten Produkt-Puffers anfallende Füllzeit und/oder eine zum Leeren des zweiten Produkt-Puffers anfallende Leerzeit größer oder gleich der Umrüstzeit ist.

Um eine optimale Auslastung der Produktionslinie zu ermöglichen, kann Steuerung den vorgeschalteten Produktionslinienabschnitt und den nachgeschalteten Produktionslinie so steuern, dass der vorgeschaltete Produktionslinienabschnitt und der nachgeschaltete Produktionslinienabschnitt mit ihrer maximal möglichen Produktionsgeschwindigkeit arbeiten, sofern die Anzahl der in einem Batch zu bearbeitenden Produkte größer oder gleich dem Produkt aus der auf diese maximale Produktionsgeschwindigkeit bezogenen Leerzeit des ersten Produkt-Puffers und der maximal möglichen Produktionsgeschwindigkeit des vorgeschalteten Produktionslinienabschnitts ist.

Sofern die Anzahl der in einem Batch zu bearbeitenden Produkte kleiner dem Produkt aus der auf die maximale Produktionsgeschwindigkeit des vorgeschalteten Produktionslinienabschnitts und des nachgeschalteten Produktionslinienabschnitt bezogene Leerzeit des ersten Produkt-Puffers und der maximal möglichen Produktionsgeschwindigkeit des vorgeschalteten Produktionslinienabschnitts, kann die Steuerung bewirken, dass der vorgeschaltete Produktionslinienabschnitt und der nachgeschaltete Produktionslinienabschnitt mit einer gegenüber ihrer maximal möglichen Produktionsgeschwindigkeit reduzierten Produktionsgeschwindigkeit arbeiten. Dies ermöglicht eine zuverlässige Produktion insbesondere für kleine Batchgrößen.

Um insbesondere auf die Bedürfnisse einer Aerosoldosenherstellung optimal zugeschnitten zu sein, sind der vorgeschaltete Produktionslinienabschnitt und der nachgeschalteten Produktionslinienabschnitt in einer vorteilhaften Ausgestaltung auf eine maximale Produktionsgeschwindigkeit von 200 Produkte/Minute ausgelegt. In einer alternativen Ausgestaltung ist die zeitweise diskontinuierlich arbeitende Bearbeitungsstation auf eine maximale Produktionsgeschwindigkeit von 250 Produkte/Minute ausgelegt. In einer weiteren vorteilhaften Ausgestaltung sind der vorgeschaltete Produktionslinienabschnitt und der nachgeschaltete Produktionslinienabschnitt auf eine maximale Produktionsgeschwindigkeit von 250 Produkte/Minute ausgelegt.

Für einen besonders zweckmäßigen Betrieb der Produktionslinie kann die maximale Produktionsgeschwindigkeit des vorgeschalteten Produktionslinienabschnitt und des nachgeschalteten Produktionslinienabschnitts höher als 150 Produkte/Minute und niedriger als 300 Produkte/Minute betragen. Um ein besonders gleichmäßiges Füllen und Leeren der Produkt-Puffer zu ermöglichen, kann die Steuerung die vorgeschalteten Produktionslinie und die nachgeschalteten Produktionslinie so steuern, dass die Produktionsgeschwindigkeit der vorgeschalteten Produktionslinie und die Produktionsgeschwindigkeit der nachgeschalteten Produktionslinie gleich sind.

In einer besonders vorteilhaften Ausgestaltung weist der vorgeschaltete Produktionslinienabschnitt eine Extrusionspresse, und der nachgeschalteten Produktionslinienabschnitt eine Bördelstation. Da derartige Stationen üblicherweise sehr kostenintensiv sind, wirkt sich eine Begrenzung ihrer maximalen Produktionsgeschwindigkeiten besonders vorteilhaft auf die Investitionskosten der gesamten Produktionsline aus.

Die Deko-Station kann aus einer Beschichtungseinheit, einer Dekorationseinheit, einer Überlackiereinheit und den zugehörigen Trockenöfen bestehen. In einer alternativen Ausgestaltung ist die zeitweise diskontinuierlich arbeitende Bearbeitungsstation als Dekorations-Trockenofen ausgebildet.

In einer weiteren vorteilhaften Ausgestaltung umfasst der vorgeschaltete Produktionslinienabschnitt eine Tiefzieh-Vorrichtung und/oder eine Abstreck-Vorrichtung. Der vorgeschaltete Produktionslinienabschnitt kann eine kombinierte Tiefzieh-Abstreck-Vorrichtung aufweisen. In einer besonders vorteilhaften Ausgestaltung ist die Tiefzieh-Vorrichtung ein "Cupper". Die Abstreck-Vorrichtung kann ein "Bodymaker" sein.

Die der Erfindung zugrundeliegende Aufgabe wird auch durch ein Verfahren zum Betreiben einer Produktionslinie gelöst, wobei die Produktionslinie eine zeitweise diskontinuierlich arbeitenden Bearbeitungsstation, einen der zeitweise diskontinuierlich arbeitenden Bearbeitungsstation vorgeschalteten Produktionslinienabschnitt, einen der zeitweise diskontinuierlich arbeitenden Bearbeitungsstation nachgeschalteten Produktionslinienabschnitt, einen zwischen dem vorgeschalteten Produktionslinienabschnitt und der zeitweise diskontinuierlich arbeitenden Bearbeitungsstation angeordneten ersten Produkt-Puffer und einen zwischen der zeitweise diskontinuierlich arbeitenden Bearbeitungsstation und dem nachgeschalteten Produktionslinienabschnitt angeordneten zweiten Produkt-Puffer aufweist.

Das Verfahren sieht vor, die zeitweise diskontinuierlich arbeitende Bearbeitungsstation nach einer Produktionsunterbrechung dieser Bearbeitungsstation solange mit einer gegenüber dem vorgeschalteten und dem nachgeschalteten Produktionslinienabschnitt erhöhten Produktionsgeschwindigkeit zu betreiben, bis der zunächst gefüllte erste Produkt-Puffer bis auf ein vorgegebenes Maß geleert ist und/oder der zunächst geleerte zweite Produkt-Puffer auf ein vorgegebenes Maß gefüllt ist.

Der vorgeschaltete Produktionslinienabschnitt und der nachgeschaltete Produktionslinienabschnitt können im Falle einer Produktionsunterbrechung der zeitweise diskontinuierlich arbeitenden Bearbeitungsstation solange weiter produzieren, bis der zunächst geleerte erste Produkt-Puffer auf ein vorgegebenes Maß gefüllt ist und/oder der zunächst gefüllte zweite Produkt-Puffer bis auf ein vorgegebenes Maß geleert ist.

In einer besonders vorteilhaften Weiterbildung sieht das Verfahren das Umrüsten der zeitweise diskontinuierlich arbeitenden Bearbeitungsstation vor, wobei die Bearbeitungsstation eine Deko-Station zum Dekorieren eine Produktes mit einer jeweils austauschbaren Dekoration ist und das Umrüsten ein Austauschen der Dekoration mit einer eine Umrüstzeit bedeutet, die entsprechende Produktionsunterbrechung der Deko-Station zur Folge hat. Die Produktions-Puffer besitzen eine Pufferkapazität die jeweils derart auf die Produktionsgeschwindigkeit des vorgeschalteten Produktionslinienabschnitts und/oder des nachgeschalteten Produktionslinienabschnitts abgestimmt ist, dass eine bei dieser Produktionsgeschwindigkeit zum Füllen des ersten Produkt-Puffers anfallende Füllzeit und/oder eine zum Leeren des zweiten Produkt-Puffers anfallende Leerzeit größer oder gleich der Umrüstzeit ist.

In einer bevorzugten Ausgestaltung werden der vorgeschaltete Produktionslinienabschnitt und der nachgeschaltete Produktionslinienabschnitt mit ihrer maximal möglichen Produktionsgeschwindigkeit betrieben, sofern die Anzahl der in einem Batch zu bearbeitenden Produkte größer oder gleich dem Produkt aus der auf diese maximale Produktionsgeschwindigkeit bezogenen Leerzeit des ersten Produkt-Puffers und der maximal möglichen Produktionsgeschwindigkeit des vorgeschalteten Produktionslinienabschnitt ist.

In einer besonders bevorzugten Ausgestaltung wird die Produktionsgeschwindigkeit des vorgeschalteten Produktionslinienabschnitts und des nachgeschalteten Produktionslinienabschnitt bezüglich ihrer maximal möglichen Produktionsgeschwindigkeit reduziert.

Im Folgenden wird die Erfindung anhand der in den Zeichnungen dargestellten beispielhaften Ausgestaltung erläutert. Die unterschiedlichen Merkmale können, wie auch bei den oben beschriebenen Ausgestaltungen, beliebig miteinander kombiniert sein.

Es zeigen:
Fig. 1 eine schematische Darstellung einer beispielhaften Ausgestaltung einer erfindungsgemäßen Produktionslinie in einem stationären Produktionszustand unmittelbar vor Beginn einer Umrüstung;
Fig. 2 eine schematische Darstellung einer beispielhaften Ausgestaltung der erfindungsgemäßen Produktionslinie aus Fig. 1, in einem Produktionszustand unmittelbar nach Beginn der Umrüstung ;
Fig. 3 eine schematische Darstellung einer beispielhaften Ausgestaltung der erfindungsgemäßen Produktionslinie aus Fig. 1, in einem Produktionszustand inmitten der Umrüstung;
Fig. 4 eine schematische Darstellung einer beispielhaften Ausgestaltung der erfindungsgemäßen Produktionslinie aus Fig. 1, in einem Produktionszustand unmittelbar vor Ende der Umrüstung;
Fig. 5 eine schematische Darstellung einer beispielhaften Ausgestaltung der erfindungsgemäßen Produktionslinie aus Fig. 1, in einem Produktionszustand unmittelbar nach Ende der Umrüstung;
Fig. 6 eine schematische Darstellung einer beispielhaften Ausgestaltung der erfindungsgemäßen Produktionslinie aus Fig. 1, in einem Produktionszustand deutlich nach Ende der Umrüstung;
Fig. 7 eine schematische Darstellung einer beispielhaften Ausgestaltung der erfindungsgemäßen Produktionslinie aus Fig. 1, in einem Produktionszustand unmittelbar vor Erreichen eines stationären Produktionszustandes;
Fig. 8 eine schematische Darstellung einer beispielhaften Ausgestaltung der erfindungsgemäßen Produktionslinie aus Fig. 1, in einem Produktionszustand in einem stationären Produktionszustand;

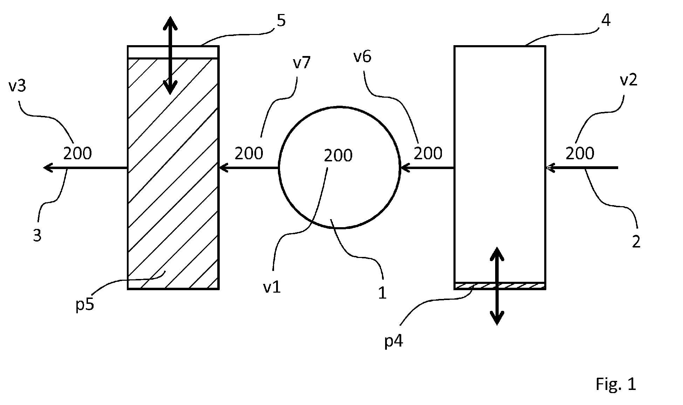

Eine Produktionslinie 100 in Fig. 1 bis Fig. 8 weist eine zeitweise diskontinuierlich arbeitende Bearbeitungsstation 1 mit einer Produktionsgeschwindigkeit v1 auf. Der zeitweise diskontinuierlich arbeitenden Bearbeitungsstation 1 ist ein Produktionslinienabschnitt 2 vorgeschaltet und ein Produktionslinienabschnitt 3 nachgeschaltet. Der Produktionslinienabschnitt 2 arbeitet mit einer Produktionsgeschwindigkeit v2, der Produktionslinienabschnitt 3 mit einer Produktionsgeschwindigkeit v3.

Zwischen dem vorgeschalteten Produktionslinienabschnitt 2 und der zeitweise diskontinuierlich arbeitenden Bearbeitungsstation 1 ist ein erster Produkt-Puffer 4 mit einem Pufferstand p4, zwischen der zeitweise diskontinuierlich arbeitenden Bearbeitungsstation 1 und dem nachgeschalteten Produktionslinienabschnitt 3 ein zweiter Produkt-Puffer 5 mit einem Pufferstand p5 angeordnet. Ein Transfer der zu bearbeitenden Produkte von dem ersten Produkt-Puffer 4 zu der Bearbeitungsstation 1 erfolgt mit einer Transfergeschwindigkeit v6, ein Transfer der bearbeiteten Produkte von der Bearbeitungsstation 1 zu dem Produkt-Puffer 4 mit einer Transfergeschwindigkeit v7. Die Änderung der Pufferstandes p4 pro Minute ist als v4, die Änderung des Pufferstandes p5 pro Minute als v5 bezeichnet. Ein Positives Vorzeichen von v4 bzw. v5 deutet auf einen steigenden Pufferstand, ein negatives Vorzeichen auf einen sinkenden Pufferstand p4 bzw. p5 hin.

In der mit Bezug auf Fig. 1 bis Fig. 8 beschriebenen Ausgestaltungen der Produktionslinien 100 wird eine Umrüstzeit T von 30 Minuten festgelegt. Der vorgeschaltete Produktionslinienabschnitt 2 und der nachgeschaltete Produktionslinienabschnitt 3 sind auf eine maximale Produktionsgeschwindigkeit von 200 cpm, die zeitweise diskontinuierlich arbeitenden Bearbeitungsstation 1 auf eine maximale Produktionsgeschwindigkeit von 250 cpm ausgelegt. Der vorgeschaltete Produktionslinienabschnitt 2 und der nachgeschaltete Produktionslinienabschnitt 3 werden kontinuierlich mit ihrer maximalen Produktionsgeschwindigkeit von 200 cpm betrieben.

Während einer Umrüstung der zeitweise diskontinuierlich arbeitenden Bearbeitungsstation 1, arbeiten der vorgeschaltete Produktionslinienabschnitt 2 und der nachgeschaltete Produktionslinienabschnitt 3 mit ihrer maximalen Produktionsgeschwindigkeit von 200 cpm weiter, wodurch diese im Zeitraum der Umrüstung vom 30 Minuten eine Anzahl von jeweils 6000 Behältern (200 cpm x 30 Minuten) bearbeiten. Zur Aufrechterhaltung einer kontinuierlichen Produktion ist demnach für die Produkt-Puffer 4 und 5 eine Puffergröße von 6000 Behältern erforderlich. Nach erfolgter Umrüstung ist der Produkt-Puffer 4 auf 6000 Behälter angewachsen, der Produkt-Puffer 5 entleert.

Die Anzahl von 6000 Behältern entspricht dem vorgegeben Maß auf das Produkt-Puffer 4 bzw. der Produkt-Puffer 5 gefüllt, die Anzahl von 0 Behältern entspricht dem vorgegeben Maß auf das der Produkt-Puffer 4 bzw. der Produkt-Puffer 5 geleert werden. Die Pufferkapazität entspricht 6000 Behältern.

Für die für den nächsten Batch erforderlichen Umrüstung muss der Pufferstand p5 auf sein ursprüngliches Maß von p5 = 6000, der Pufferstand p4 auf sein ursprüngliches Maß von p4 = 0 zurückgeführt werden. Da die zeitweise diskontinuierlich arbeitenden Bearbeitungsstation 1 auf eine maximale Produktionsgeschwindigkeit von 250 cpm ausgelegt ist, und damit die maximale Produktionsgeschwindigkeit des vorgeschalteten Produktionslinienabschnitts 2 bzw. des nachgeschalteten Produktionslinienabschnitts 3 um 50 cpm übersteigt, ergibt sich ein Zeitraum von 120 Minuten (6000 / (250 cpm - 50 cpm)) für das vollständige Beladen des Produkt-Puffers 5 bzw. Entladen des Produkt-Puffers 4.

In dem Zeitraum von 120 Minuten wird der vorgeschaltete Produktionslinienabschnitt 2 und der nachgeschaltete Produktionslinienabschnitt 3 von 24000 Behältern (120 Minuten x 200 cpm) durchlaufen. Diese Anzahl von 24000 Behältern stellt damit gleichsam eine minimale Batchgröße B dar, bis zu der ein kontinuierliches Arbeiten des vorgeschalteten Produktionslinienabschnitts 2 und des nachgeschalteten Produktionslinienabschnitts 3 möglich ist.

Diese Festlegungen sind auf die vorliegende Ausgestaltung bezogen und sind ohne Beschränkung der Allgemeinheit zu verstehen. Weiterhin ist dem Fachmann ist klar, dass die festgelegten Werte in der produktionstechnischen Realität nicht mathematisch exakt eingehalten werden, vielmehr unterliegen sie den üblichen technischen Schwankungen oder anderen produktionstechnischen Erwägungen.

Fig. 1 zeigt die Produktionslinie in einem stationären Produktionszustand, dem Stationär-Modus. Die gesamte Produktionslinie 100 arbeitet mit einer einheitlichen Produktionsgeschwindigkeit von 200 cpm (v1 = v2 = v3 = v6 = v7 = 200 cpm). Der Produkt-Puffer 4 ist geleertem Zustand (p4 = 0), wohingegen 6000 Behälter vom zweiten Produkt-Puffer 5 umfasst sind (p5 = 6000).

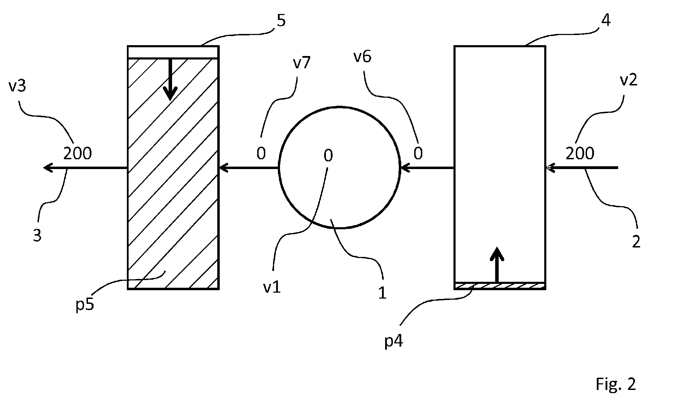

Fig. 2 bis Fig. 4 zeigen die Produktionslinie während der Umrüstung, dem Umrüstmodus. In dieser Zeit steht die zeitweise diskontinuierlich arbeitende Bearbeitungsstation 1 still (v1 = 0 cpm). Ein Transfer von Produkten von dem ersten Produkt-Puffer 4 zu der Bearbeitungsstation 1 findet ebenso wenig statt, wie ein Transfer von Produkten von der Bearbeitungsstation 1 zu dem Produkt-Puffer 4, d.h. die Transfergeschwindigkeiten v7 bzw. v6 betragen 0 cpm. Der vorgeschaltete Produktionslinienabschnitt 2 und der nachgeschaltete Produktionslinienabschnitt 3 arbeiten mit der Produktionsgeschwindigkeit von 200 cpm, wodurch diese im Zeitraum der Umrüstung eine Anzahl von jeweils 6000 Behältern (200 cpm x 30 Minuten) bearbeiten. Diese Anzahl bestimmt den für die Aufrechterhaltung einer kontinuierlichen Produktion erforderlichen Pufferbedarf.

Mit Beginn des Umrüst-Modus (Fig. 2) steigt der Pufferstand p4 des Produkt-Puffers 4 mit 200 cpm, der Pufferstand p5 des Produkt-Puffers 5 schmilzt mit 200 cpm ab. Nach einer Umrüstzeit von 5 Minuten umfasst der Produkt-Puffer 4 1000 Behälter (p4 = 1000), der Produkt-Puffer 5 weist einen Stand von 5000 Behältern auf (p5 = 5000).

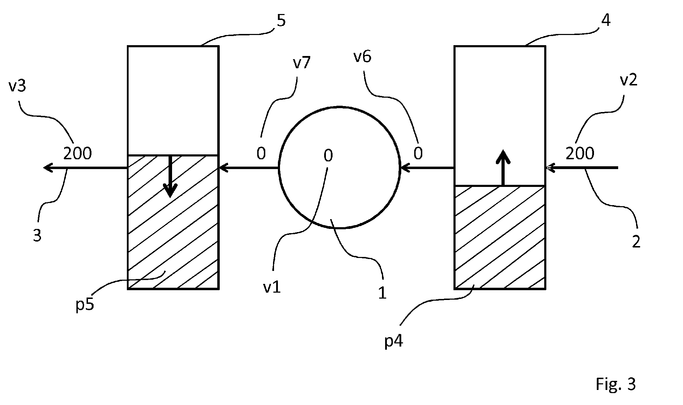

Inmitten des Umrüst-Modus (Fig. 3), nach 15 Minuten, umfasst der Produkt-Puffer 4 3000 Behälter (p4 = 3000), der Produkt-Puffer 5 weist ebenfalls einen Stand von 3000 Behältern auf (p5 = 3000).

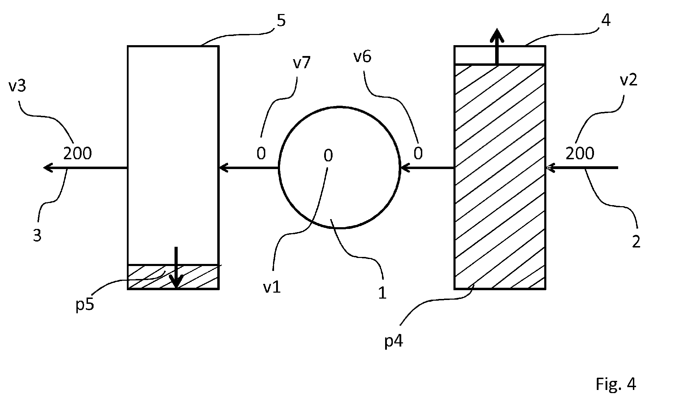

Unmittelbar vor Ende des Umrüst-Modus (Fig. 4), nach 28 Minuten, umfasst der ProduktPuffer 4 5600 Behälter (p4 = 5600), der Produkt-Puffer 5 weist einen Stand von 400 Behältern auf (p5 = 400).

Mit dem Ende des Umrüst-Modus, nach 30 Minuten, umfasst der Produkt-Puffer 4 6000 Behälter (p4 = 6000), der Produkt-Puffer 5 ist leer (p5 = 0).

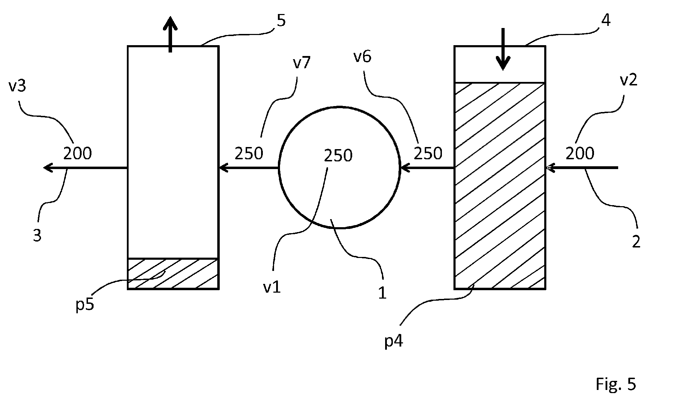

Fig. 5 bis Fig. 7 zeigen die Produktionslinie während des Auffüllens des Produkt-Puffers 4, dem Nachfüll-Modus. Im Nachfüll-Modus, der sich unmittelbar an den Umrüst-Modus anschließt, arbeitet die zeitweise diskontinuierlich arbeitende Bearbeitungsstation 1 mit einer erhöhten Produktionsgeschwindigkeit (v1 = 250 cpm). Ein Transfer von Produkten von dem ersten Produkt-Puffer 4 zu der Bearbeitungsstation 1, sowie wie ein Transfer von Produkten von der Bearbeitungsstation 1 zu dem Produkt-Puffer 4 erfolgt demensprechend jeweils mit einer erhöhten Transfergeschwindigkeit, d.h. die Transfergeschwindigkeiten v7 bzw. v6 betragen jeweils 250 cpm. Der vorgeschaltete Produktionslinienabschnitt 2 und der nachgeschaltete Produktionslinienabschnitt 3 arbeiten weiterhin mit der Produktionsgeschwindigkeit von 200 cpm. Für den Produkt-Puffer 4 ergibt sich ein Saldo von - 50 cpm (v2 -v6), d.h. der Puffstand p4 sinkt, der Pufferstand p5 steigt um 50 cpm (v7 - v3), d.h. der Puffstand p4 steigt. Da der Pufferstand p5 auf sein ursprüngliches Maß von p5 = 6000 zurückgeführt werden muss, ergibt sich eine Länge des Nachfüllmodus von 120 Minuten (6000 / 50 cpm).

Fünf Minuten nach Beginn des Nachfüll-Modus (Fig. 5), Minuten umfasst Produkt-Puffer 5 250 Behälter auf (p5 = 250), der Produkt-Puffer 4 weist einen Stand von 5750 Behältern (p4 = 5750) auf.

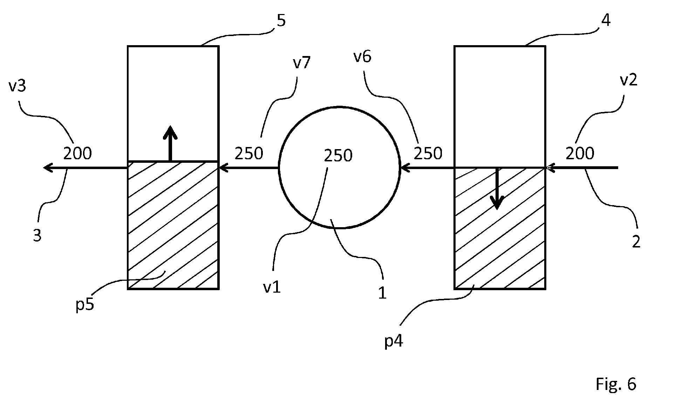

Inmitten des Nachfüll-Modus (Fig. 6), d.h. 60 Minuten nach Beginn des Nachfüll-Modus, umfasst der Produkt-Puffer 5 3000 Behälter (p5 = 3000), der Produkt-Puffer 4 weist ebenfalls einen Stand von 3000 Behältern (p4 = 3000) auf.

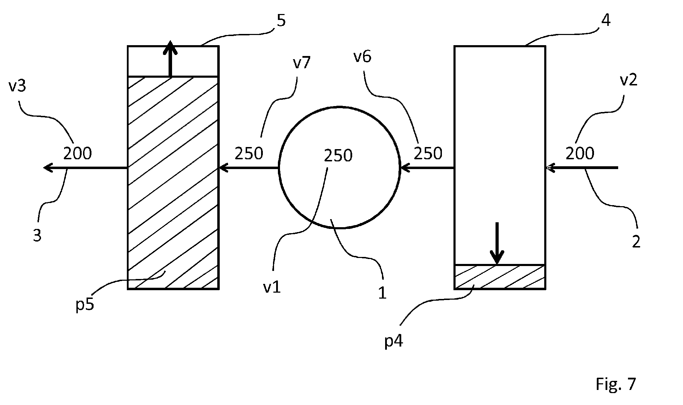

Unmittelbar vor Ende des Nachfüll-Modus (Fig. 7), d.h. 110 Minuten nach Beginn des Nachfüll-Modus, Minuten umfasst der Produkt-Puffer 5 5500 Behälter (p5 = 5500), der Produkt-Puffer 4 weist einen Stand von 500 Behältern auf (p5 = 500).

Mit dem Ende des Nachfüll-Modus, nach 120 Minuten, ist der Produkt-Puffer 5 ist vollständig gefüllt (p5 = 6000), der Produkt-Puffer 4 umfasst keinen Behälter mehr (p4 = 0).

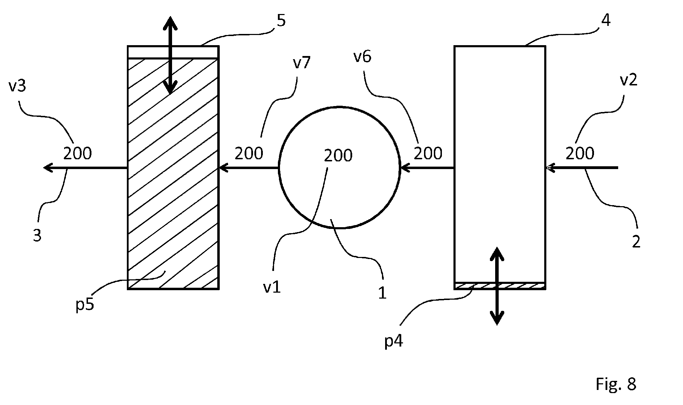

Fig. 8 zeigt die Produktionslinie 100 wiederum in einem stationären Produktionszustand, der sich unmittelbar an den mit Bezug auf die Fig. 5 bis Fig. 7 beschriebenen Nachfüll-Modus anschließt. Die gesamte Produktionslinie 100 arbeitet mit einer einheitlichen Produktionsgeschwindigkeit von 200 cpm (v1 = v2 = v3 = v6 = v7 = 200 cpm). Der Produkt-Puffer 4 ist geleertem Zustand (p4 = 0), wohingegen 6000 Behälter vom zweiten Produkt-Puffer 5 umfasst sind (p5 = 6000).

Die folgende Tabelle fasst die Kennwerte für die vorbeschriebene Ausgestaltung übersichtlich zusammen.

| Bezugszeichen / Produktionszustand | Stationär-Modus (Fig. 1, Fig. 8) | Umrüst-Modus (Fig. 2 - Fig. 4) | Nachfüll-Modus (Fig. 5 - Fig. 7) |
|---|---|---|---|
| p4 (c = Behälter) | 0 | 0-6000 | 6000 - 0 |
| v4 (cpm) | 0 | 200 | -50 |
| p5 (c = Behälter) | 600 | 6000 - 0 | 0 - 6000 |
| v5 (cpm) | 0 | -200 | 50 |
| v6 (cpm) | 200 | 0 | 250 |
| v7 (cpm) | 200 | 0 | 250 |
| v1 (cpm) | 200 | 0 | 250 |
| v2 (cpm) | 200 | 200 | 200 |
| v3 (cpm) | 200 | 200 | 200 |

In der vorbeschriebenen Ausgestaltung werden innerhalb von 120 Minuten, was der Zeit zum vollständigen Beladen des Produkt-Puffers 5 bzw. Entladen des Produkt-Puffers 4 entspricht, durch den vorgeschaltete Produktionslinienabschnitt 2 und den nachgeschaltete Produktionslinienabschnitt 3 jeweils 24000 Behälter (120 Minuten x 200 cpm) bearbeitet. Das bedeutet, dass die gesamte Produktionslinie in diesen 120 Minuten 24000 Behälter - ein Batch - bearbeitet. Diese Anzahl von 24000 Behältern, die eine typische Batchgröße bei der Aerosoldosenherstellung darstellt, stellt gleichsam eine minimale Batchgröße dar, bis zu der ein kontinuierliches Arbeiten des vorgeschalteten Produktionslinienabschnitts 2 und des nachgeschalteten Produktionslinienabschnitts 3 bei ihrer maximalen Produktionsgeschwindigkeit von 200 cpm möglich ist.

Die der vorbeschriebenen Ausgestaltung zugrundeliegenden Auslegungsgrößen können, über diese konkrete Ausgestaltung hinausgehend, allgemeingültig bestimmt werden.

Um ein weiteres Beispiel zu nennen, können - abhängig von der zu bearbeiteten Batchgröße und der Umrüstzeit - der vorgeschaltete Produktionslinienabschnitts 2 und der nachgeschaltete Produktionslinienabschnitt 3 beispielsweise eine maximale Produktionsgeschwindigkeit von 150 cpm aufweisen und die zeitweise diskontinuierlich arbeitende Bearbeitungsstation 1 mit einer erhöhten Produktionsgeschwindigkeit von 200 cpm arbeiten (150/200-Betriebsmodus). Weitere Betriebsmodi sind beispielsweise 150/180, 250/300 oder 250/350.

Die folgende Tabelle zeigt die erforderlicher Differenz der Produktionsgeschwindigkeiten, d.h. den Betrag um den die Produktionsgeschwindigkeit der zeitweise diskontinuierlich arbeitenden Bearbeitungsstation nach einer Produktionsunterbrechung dieser Bearbeitungsstation die Produktionsgeschwindigkeit der ihr vorgeschalteten und nachgeschalteten Produktionslinienabschnitte übersteigen muss um eine kontinuierliche Produktion der gesamten Produktionslinie zu ermöglichen, in Abhängigkeit von der Batchgröße und der jeweiligen Umrüstzeit.

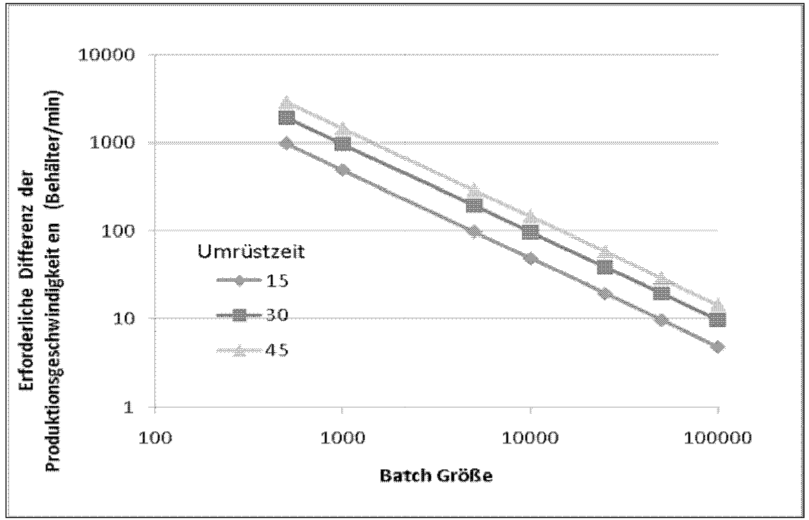

Der Tabelle liegt die folgende allgemeine Berechnungsvorschrift, wobei der erste und zweite Produktpuffer die gleiche Puffer-Kapazität und der zeitweise vorgeschalteten Produktionslinienabschnitt und der nachgeschalteten Produktionslinienabschnitt die gleiche Produktionsgeschwindigkeit aufweisen:
Differenz der Produktionsgeschwindigkeiten = Umrüstzeit × (Produktionsgeschwindigkeit des vorgeschalteten Produktionslinienabschnitts)² / Batchgröße wobei
Batchgröße = Leerzeit des Produktpuffers * Produktionsgeschwindigkeit des vorgeschalteten Produktionslinienabschnitts
Leerzeit des Produktpuffers = Puffer-Kapazität des Produktpuffers / (Erhöhte Produktionsgeschwindigkeit der zeitweise diskontinuierlich arbeitenden Bearbeitungsstation - Produktionsgeschwindigkeit des vorgeschalteten Produktionslinienabschnitts)
Puffer-Kapazität des Produkt-Puffers = Umrüstzeit × Produktionsgeschwindigkeit des vorgeschalteten Produktionslinienabschnitts.

## Patentansprüche

1. Produktionslinie (100) mit Bearbeitungsstationen, die Produkte mit einer Produktionsgeschwindigkeit Produkte/Zeiteinheit bearbeiten, wobei die Produktionslinie (100)
- eine zeitweise diskontinuierlich arbeitende Bearbeitungsstation (1), sowie
- einen der zeitweise diskontinuierlich arbeitenden Bearbeitungsstation (1) vorgeschalteten Produktionslinienabschnitt (2) und
- einen der zeitweise diskontinuierlich arbeitenden Bearbeitungsstation (1) nachgeschalteten Produktionslinienabschnitt (3)
aufweist und
- zwischen dem vorgeschalteten Produktionslinienabschnitt (2) und der zeitweise diskontinuierlich arbeitenden Bearbeitungsstation (1) ein erster Produkt-Puffer (4) und
- zwischen der zeitweise diskontinuierlich arbeitenden Bearbeitungsstation (1) und dem nachgeschalteten Produktionslinienabschnitt (3) ein zweiter Produkt-Puffer (5) vorgesehen ist, und
wobei die Produktionslinie (100) mit einer Steuerung verbunden ist,
**dadurch gekennzeichnet, dass** die Steuerung die Produktionslinie (100) so steuert,
- dass die zeitweise diskontinuierlich arbeitende Bearbeitungsstation (1) nach einer Produktionsunterbrechung dieser Bearbeitungsstation (1) solange mit einer gegenüber dem vorgeschalteten (2) und dem nachgeschalteten (3) Produktionslinienabschnitt erhöhten Produktionsgeschwindigkeit arbeitet, bis der zunächst gefüllte erste Produkt-Puffer (4) bis auf ein vorgegebenes Maß geleert ist und/oder der zunächst geleerte zweite Produkt-Puffer (5) auf ein vorgegebenes Maß gefüllt ist, so,
- dass der vorgeschaltete Produktionslinienabschnitt (2) und der nachgeschaltete Produktionslinienabschnitt (3) im Falle einer Produktionsunterbrechung der zeitweise diskontinuierlich arbeitenden Bearbeitungsstation (1) solange weiter produzieren können bis der zunächst geleerte erste Produkt-Puffer (4) auf ein vorgegebenes Maß gefüllt ist und/oder der zunächst gefüllte zweite Produkt-Puffer (5) bis auf ein vorgegebenes Maß geleert ist.

2. Produktionslinie (100) gemäß Anspruch 1, **dadurch gekennzeichnet, dass**
- die zeitweise diskontinuierlich arbeitende Bearbeitungsstation (1) eine Deko-Station zum Dekorieren eine Produktes mit einer jeweils austauschbaren Dekoration ist, wobei das Austauschen der Dekoration eine Umrüstzeit erfordert, die eine entsprechende Produktionsunterbrechung der Deko-Station zur Folge hat, und
- die Produktions-Puffer (4,5) eine Pufferkapazität besitzen, die jeweils derart auf die Produktionsgeschwindigkeit des vorgeschalteten Produktionslinienabschnitts (2) und/oder des nachgeschalteten Produktionslinienabschnitts (3) abgestimmt ist, dass eine bei dieser Produktionsgeschwindigkeit zum Füllen des ersten Produkt-Puffers (4) anfallende Füllzeit und/oder eine zum Leeren des zweiten Produkt-Puffers (5) anfallende Leerzeit größer oder gleich der Umrüstzeit ist.

3. Produktionslinie (100) gemäß Anspruch 1 oder 2, **dadurch gekennzeichnet, dass**
- die Steuerung den vorgeschalteten Produktionslinienabschnitt (2) und den nachgeschalteten Produktionslinienabschnitt (3) so steuert, dass
- der vorgeschaltete Produktionslinienabschnitt (2) und der nachgeschaltete Produktionslinienabschnitt (3) mit ihrer maximal möglichen Produktionsgeschwindigkeit arbeiten, sofern die Anzahl der in einem Batch zu bearbeitenden Produkte größer oder gleich dem Produkt aus der auf diese maximale Produktionsgeschwindigkeit bezogenen Leerzeit des ersten Produkt-Puffers (4) und der maximal möglichen Produktionsgeschwindigkeit des vorgeschalteten Produktionslinienabschnitt (2) ist, und
und, falls diese Bedingung nicht zutrifft,
- der vorgeschaltete Produktionslinienabschnitt (2) und der nachgeschaltete Produktionslinienabschnitt (3) mit einer gegenüber ihrer maximal möglichen Produktionsgeschwindigkeit reduzierten Produktionsgeschwindigkeit arbeiten.

4. Produktionslinie (100) gemäß einem der Ansprüche 1 bis 3, **dadurch gekennzeichnet, dass**
- der vorgeschaltete Produktionslinienabschnitt (2) und der nachgeschalteten Produktionslinienabschnitt (3) auf eine maximale Produktionsgeschwindigkeit von 200 Produkte/Minute ausgelegt sind.

5. Produktionslinie (100) gemäß einem der Ansprüche 1 bis 3, **dadurch gekennzeichnet, dass**
- der vorgeschaltete Produktionslinienabschnitt (2) und der nachgeschalteten Produktionslinienabschnitt (3) auf eine maximale Produktionsgeschwindigkeit von 250 Produkte/Minute ausgelegt sind.

6. Produktionslinie (100) gemäß einem der Ansprüche 1 bis 5, **dadurch gekennzeichnet, dass**
- die Steuerung den vorgeschalteten Produktionslinienabschnitt (2) und den nachgeschalteten Produktionslinienabschnitt (3) so steuert, dass die Produktionsgeschwindigkeit des vorgeschalteten Produktionslinienabschnitts und die Produktionsgeschwindigkeit des nachgeschalteten Produktionslinienabschnitts gleich sind.

7. Produktionslinie (100) gemäß einem der Ansprüche 1 bis 6, **dadurch gekennzeichnet, dass**
- der vorgeschaltete Produktionslinienabschnitt (2) eine Extrusionspresse, und der nachgeschalteten Produktionslinienabschnitt (3) eine Bördelstation aufweist.

8. Produktionslinie (100) gemäß einem der Ansprüche 1 bis 7, **dadurch gekennzeichnet, dass**
- der vorgeschaltete Produktionslinienabschnitt (2) eine Tiefzieh-Vorrichtung und/oder eine Abstreck-Vorrichtung oder eine kombinierte Tiefzieh-Abstreck-Vorrichtung aufweist.

9. Verfahren zum Betreiben einer Produktionslinie (100) mit,
- einer zeitweise diskontinuierlich arbeitenden Bearbeitungsstation (1),
- einem der zeitweise diskontinuierlich arbeitenden Bearbeitungsstation (1) vorgeschalteten Produktionslinienabschnitt (2),
- einem der zeitweise diskontinuierlich arbeitenden Bearbeitungsstation (1) nachgeschalteten Produktionslinienabschnitt (3),
- einem zwischen dem vorgeschalteten Produktionslinienabschnitt (2) und der zeitweise diskontinuierlich arbeitenden Bearbeitungsstation (1) angeordneten ersten Produkt-Puffer (4), und
- einem zwischen der zeitweise diskontinuierlich arbeitenden Bearbeitungsstation (1) und dem nachgeschalteten Produktionslinienabschnitt (3) angeordneten zweiten Produkt-Puffer (5),
**gekennzeichnet durch** die Verfahrensschritte:
- Betreiben der zeitweise diskontinuierlich arbeitenden Bearbeitungsstation (1) nach einer Produktionsunterbrechung dieser Bearbeitungsstation (1) solange mit einer gegenüber dem vorgeschalteten und dem nachgeschalteten Produktionslinienabschnitt (2,3) erhöhten Produktionsgeschwindigkeit, bis der zunächst gefüllte erste Produkt-Puffer (4) bis auf ein vorgegebenes Maß geleert ist und/oder der zunächst geleerte zweite Produkt-Puffer (5) auf ein vorgegebenes Maß gefüllt ist, so dass
- der vorgeschaltete Produktionslinienabschnitt (2) und der nachgeschaltete Produktionslinienabschnitt (3) im Falle einer Produktionsunterbrechung der zeitweise diskontinuierlich arbeitenden Bearbeitungsstation (1) solange weiter produzieren können bis der zunächst geleerte erste Produkt-Puffer (4) auf ein vorgegebenes Maß gefüllt ist und/oder der zunächst gefüllte zweite Produkt-Puffer (5) bis auf ein vorgegebenes Maß geleert ist.

10. Verfahren gemäß Anspruch 9, **gekennzeichnet durch** den Verfahrensschritt:
- Umrüsten der zeitweise diskontinuierlich arbeitenden Bearbeitungsstation (1), wobei die Bearbeitungsstation (1) eine Deko-Station zum Dekorieren eine Produktes mit einer jeweils austauschbaren Dekoration ist und das Umrüsten ein Austauschen der Dekoration mit einer eine Umrüstzeit bedeutet, die entsprechende Produktionsunterbrechung der Deko-Station zur Folge hat, und
- die Produktions-Puffer (4,5) eine Pufferkapazität besitzen, die jeweils derart auf die Produktionsgeschwindigkeit des vorgeschalteten Produktionslinienabschnitts (2) und/oder des nachgeschalteten Produktionslinienabschnitts (3) abgestimmt ist, dass eine bei dieser Produktionsgeschwindigkeit zum Füllen des ersten Produkt-Puffers (4) anfallende Füllzeit und/oder eine zum Leeren des zweiten Produkt-Puffers (5) anfallende Leerzeit größer oder gleich der Umrüstzeit ist.

11. Verfahren gemäß Anspruch 9 oder 10, **gekennzeichnet durch** den Verfahrensschritt:
- Betreiben des vorgeschalteten Produktionslinienabschnitts (2) und des nachgeschaltete Produktionslinienabschnitt (3) mit ihrer maximal möglichen Produktionsgeschwindigkeit, sofern die Anzahl der in einem Batch zu bearbeitenden Produkte größer oder gleich dem Produkt aus der auf diese maximale Produktionsgeschwindigkeit bezogenen Leerzeit des ersten Produkt-Puffers (4) und der maximal möglichen Produktionsgeschwindigkeit des vorgeschalteten Produktionslinienabschnitt ist,
und, falls diese Bedingung nicht zutrifft,
- Reduzieren Produktionsgeschwindigkeit des vorgeschalteten Produktionslinienabschnitts (2) und des nachgeschalteten Produktionslinienabschnitts (3) bezüglich ihrer maximal möglichen Produktionsgeschwindigkeit.

## Claims

1. Production line (100) comprising processing stations which process products at a production speed in products per unit time, the production line (100) comprising:
- a temporarily discontinuously operating processing station (1), and
- a production line section (2) connected upstream of the temporarily discontinuously operating processing station (1) and
- a production line section (3) connected downstream of the temporarily discontinuously operating processing station (1)
and wherein
- a first product buffer (4) is provided between the upstream production line section (2) and the temporarily discontinuously operating processing station (1) and
- a second product buffer (5) is provided between the temporarily discontinuously operating processing station (1) and the downstream production line section (3), and
wherein the production line (100) is connected to a control,
**characterised in that** the control controls the production line (100) so that
- the temporarily discontinuously operating processing station (1) operates with an increased production speed that is increased relative to the upstream (2) production line section and the downstream (3) production line section after a production interruption of said processing station (1) until the initially filled first product buffer (4) is emptied by a predetermined amount and/or the initially emptied second product buffer (5) is filled to a predetermined level, so
- that the upstream production line section (2) and the downstream production line section (3) can continue to produce in case of a production interruption of the temporarily discontinuously operating processing station (1) until the initially emptied first product buffer (4) is filled to a predetermined level and/or the initially filled second product buffer (5) is emptied to a predetermined level.

2. Production line (100) according to claim 1,
**characterised in that**
- the temporarily discontinuously operating processing station (1) is a deco station for decorating a product with a respectively replaceable decoration, wherein replacing the decoration requires a retrofit time which causes a respective production interruption of the deco station, and
- the production buffers (4, 5) have a buffer capacity which is respectively adjusted to the production speed of the respective upstream production line section (2) and/or the respective downstream production line section (3), so that a filling time provided at this production speed for filling the first product buffer (4) and/or an emptying time provided for emptying the second product buffer (5) is greater than or equal to the retrofit time.

3. Production line (100) according to either claim 1 or 2, **characterised in that**
- the control controls the upstream production line section (2) and the downstream production line section (3) so that
- the upstream production line section (2) and the downstream production line section (3) operate at their maximum possible production speeds, provided the number of products to be processed in a batch is greater than or equal to the product of the emptying time of the first product buffer (4) related to this maximum production speed and the maximum possible production speed of the upstream production line section (2), and
if this condition does not apply,
- the upstream production line section (2) and the downstream production line section (3) operate at a production speed that is reduced relative to their maximum possible production speed.

4. Production line (100) according to any one of claims 1 to 3, **characterised in that**
- the upstream production line section (2) and the downstream production line section (3) are configured for a maximum production speed of 200 products per minute.

5. Production line (100) according to any one of claims 1 to 3, **characterised in that**
- the upstream production line section (2) and the downstream production line section (3) are configured for a maximum production speed of 250 products per minute.

6. Production line (100) according to any one of claims 1 to 5, **characterised in that**
- the control controls the upstream production line section (2) and the downstream production line section (3) so that the production speed of the upstream production line section and the production speed of the downstream production line section are equal.

7. Production line (100) according to any one of claims 1 to 6, **characterised in that**
- the upstream production line section (2) includes an extrusion press and the downstream production line section (3) includes a folding station.

8. Production line (100) according to any one of claims 1 to 7, **characterised in that**
- the upstream production line section (2) includes a drawing device and/or a stretching device or a combined drawing-stretching device.

9. Method for operating a production line (100) comprising,
- a temporarily discontinuously operating processing station (1),
- a production line section (2) connected upstream of the temporarily discontinuously operating processing station (1),
- a production line section (3) connected downstream from the temporarily discontinuously operating processing station (1),
- a first product buffer (4) arranged between the upstream production line section (2) and the temporarily discontinuously operating processing station (1), and
- a second product buffer (5) arranged between the temporarily discontinuously operating processing station (1) and the downstream production line section (3),
**characterised by** the method steps:
- operating the temporarily discontinuously operating processing station (1) with an increased production speed that is increased relative to the upstream production line section and the downstream production line section (2, 3) after a production interruption of said processing station (1) until the initially filled first product buffer (4) is emptied to a predetermined level and/or the initially emptied second product buffer (5) is filled to a predetermined level, so that
- the upstream production line section (2) and the downstream production line section (3) can continue to produce in case of a production interruption of the temporarily discontinuously operating processing station (1) until the initially emptied first product buffer (4) is filled to a predetermined level and/or the initially filled second product buffer (5) is emptied to a predetermined level.

10. Method according to claim 9, **characterised by** the method step:
- retrofitting the temporarily discontinuously operating processing station (1), wherein the processing station (1) is a deco station for decorating a product with a respectively replaceable decoration, and replacing the decoration requires a retrofit time which results in a respective production interruption of the deco station, and
- the production buffers (4, 5) have a buffer capacity which is respectively adjusted to the production speed of the respective upstream production line section (2) and the respective downstream production line section (3), so that a filling time provided at this production speed for filling the first product buffer (4) and/or an emptying time provided for emptying the second product buffer (5) is greater or equal to the retrofit time.

11. Method according to either claim 9 or 10, **characterised by** the method step:
- operating the upstream production line section (2) and the downstream production line section (3) at their maximum possible production speeds provided the number of products to be processed in a batch is greater or equal to the product of the emptying time of the first product buffer (4) related to this maximum production speed and the maximum possible production speed of the upstream production line section, and
if this condition does not apply,
- reducing the production speed of the upstream production line section (2) and the downstream production line section (3) relative to their maximum possible production speed.

## Revendications

1. Ligne (100) de production ayant des postes de traitement, qui traitent des produits à une vitesse de production produits/unité de temps, la ligne (100) de production comportant
- un poste (1) de traitement par moments de manière discontinue,
- une partie (2) de la ligne de production en amont du poste (1) de traitement fonctionnant par moments de manière discontinue et
- une partie (3) de la ligne de production en aval du poste (1) de traitement fonctionnant par moments de manière discontinue
et il est prévu
- un premier tampon (4) de produit entre la partie (2) de la ligne de production en amont et le poste (1) de traitement fonctionnant par moments de manière discontinue et
- un deuxième tampon (5) de produit entre le poste (1) de traitement fonctionnant par moments de manière discontinue et la partie (3) de la ligne de production en aval et
la ligne (100) de production étant reliée à une commande,
**caractérisée en ce que** la commande commande la ligne (100) de production de manière
- à ce que le poste (1) de traitement fonctionnant par moments de manière discontinue fonctionne, après une interruption de la production de ce poste (1) de traitement, à une vitesse de production plus grande que celles à la partie de la ligne de production en amont (2) et à la partie de la ligne de production en aval (3) jusqu'à ce que le premier tampon (4) de produit d'abord rempli soit vidé jusqu'à une valeur donnée à l'avance et/ou jusqu'à ce que le deuxième tampon (5) de produit d'abord vidé soit rempli jusqu'à une valeur donnée à l'avance, de sorte que
- la partie (2) de la ligne de production en amont et la partie (3) de la ligne de production en aval peuvent, s'il se produit une interruption de la production du poste (1) de traitement fonctionnant par moments de manière discontinue, continuer à produire jusqu'à ce que le premier tampon (4) de produit d'abord vidé soit rempli jusqu'à une valeur déterminée à l'avance et/ou jusqu'à ce que le deuxième tampon (5) de produit d'abord rempli soit vidé jusqu'à une valeur donnée à l'avance.

2. Ligne (100) de production suivant la revendication 1, **caractérisée en ce que**
- le poste (1) de traitement fonctionnant par moments de manière discontinue est un poste de décoration pour décorer un produit d'une décoration pouvant être remplacée, le remplacement de la décoration exigeant un temps de rééquipement, qui a pour conséquence une interruption correspondante de la production du poste de décoration et
- les tampons (4, 5) de production ont une capacité tampon, qui est adaptée respectivement à la vitesse de production de la partie (2) de la ligne de production en amont et/ou de la partie (3) de la ligne de production en aval, de manière à ce qu'un temps de remplissage du premier tampon (4) de produit se produisant à cette vitesse de production et/ou un temps de vidange du deuxième tampon (5) de produit soit supérieur ou égal au temps de rééquipement.

3. Ligne (100) de production suivant la revendication 1 ou 2, **caractérisée en ce que**
- la commande commande la partie (2) de la ligne de production en amont et la partie (3) de la ligne de production en aval de manière à ce que
- la partie (2) de la ligne de production en amont et la partie (3) de la ligne de production en aval fonctionnent à leur vitesse de fonctionnement possible au maximum dans la mesure où le nombre des produits à traiter dans un lot est supérieur ou égal au produit du temps de vidange, rapporté à cette vitesse de production maximum, du premier tampon (4) de produit par la vitesse de production possible au maximum de la partie (2) de la ligne de production en amont et,
si cette condition n'est pas réalisée,
- la partie (2) de la ligne de production en amont et la partie (3) de la ligne de production en aval fonctionnent à une vitesse de production réduite par rapport à leur vitesse de production possible au maximum.

4. Ligne (100) de production suivant l'une des revendications 1 à 3, **caractérisée en ce que**
- la partie (2) de la ligne de production en amont et la partie (3) de la ligne de production en aval sont conçues pour une vitesse de production au maximum de 200 produits/minute.

5. Ligne (100) de production suivant l'une des revendications 1 à 3, **caractérisée en ce que**
- la partie (2) de la ligne de production en amont et la partie (3) de la ligne de production en aval sont conçues pour une vitesse de production au maximum de 250 produits/minute.

6. Ligne (100) de production suivant l'une des revendications 1 à 5, **caractérisée en ce que**
- la commande commande la partie (2) de la ligne de production en amont et la partie (3) de la ligne de production en aval de manière à ce que la vitesse de production de la partie de la ligne de production en amont et la vitesse de production de la partie de la ligne de production en aval soient égales.

7. Ligne (100) de production suivant l'une des revendications 1 à 6, **caractérisée en ce que**
- la partie (2) de la ligne de production en amont est une presse d'extrusion et la partie (3) de la ligne de production en aval est un poste à border.

8. Ligne (100) de production suivant l'une des revendications 1 à 7, **caractérisée en ce que**
- la partie (2) de la ligne de production en amont comporte un dispositif d'emboutissage et/ou un dispositif d'étirage ou un dispositif combiné d'emboutissage-étirage.

9. Procédé pour faire fonctionner une ligne (100) de production comprenant
- un poste (1) de traitement fonctionnant par moments de manière discontinue,
- une partie (2) de la ligne de production en amont du poste (1) de traitement fonctionnant par moments de manière discontinue,
- une partie (3) de la ligne de production en aval du poste (1) de traitement fonctionnant par moments de manière discontinue,
- un premier tampon (4) de produit monté entre la partie (2) de la ligne de production en amont et le poste (1) de traitement fonctionnant par moments de manière discontinue et
- un deuxième tampon (5) de produit monté entre le poste (1) de traitement fonctionnant par moments de manière discontinue et la partie (3) de la ligne de production en aval,
**caractérisé par** les stades de procédé :
- on fait fonctionner le poste (1) de traitement fonctionnant par moments de manière discontinue, après une interruption de la production de ce poste (1) de traitement, à une vitesse de production plus grande que celles aux parties (2, 3) de la ligne de production en amont et en aval jusqu'à ce que le premier tampon (4) de produit d'abord rempli soit vidé jusqu'à une valeur donnée à l'avance et/ou jusqu'à ce que le deuxième tampon (5) de produit d'abord vidé soit rempli jusqu'à une valeur donnée à l'avance, de sorte que
- la partie (2) de la ligne de production en amont et la partie (3) de la ligne de production en aval peuvent, s'il se produit une interruption de la production du poste (1) de traitement fonctionnant par moments de manière discontinue, continuer à produire jusqu'à ce que le premier tampon (4) de produit d'abord vidé soit rempli jusqu'à une valeur déterminée à l'avance et/ou jusqu'à ce que le deuxième tampon (5) de produit d'abord rempli soit vidé jusqu'à une valeur donnée à l'avance.

10. Procédé suivant la revendication 9, **caractérisé par** le stade de procédé :
- on rééquipe le poste (1) de traitement fonctionnant par moments de manière discontinue, le poste (1) de traitement étant un poste de décoration pour décorer un produit d'une décoration remplaçable et le rééquipement emporte un remplacement de la décoration avec un temps de rééquipement, qui a pour conséquence une interruption correspondante de la production du poste de décoration et
- des tampons (4, 5) de production ont une capacité tampon, qui est adaptée respectivement à la vitesse de production de la partie (2) de la ligne de production en amont et/ou de la partie (3) de la ligne de production en aval, de manière à ce qu'un temps de remplissage du premier tampon (4) de produit se produisant à cette vitesse de production et/ou un temps de vidange du deuxième tampon (5) de produit soit supérieur ou égal au temps de rééquipement.

11. Procédé suivant la revendication 9 ou 10, **caractérisé par** le stade de procédé:
- on fait fonctionner la partie (2) de la ligne de production en amont et la partie (3) de la ligne de production en aval à leur vitesse de production possible au maximum jusqu'à ce que le nombre des produits à traiter dans un lot soit supérieur ou égal au produit du temps de vidange, rapporté à cette vitesse de production maximum, du premier tampon (4) de produit par la vitesse de production possible au maximum de la partie (2) de la ligne de production en amont et,
si cette condition n'est pas satisfaite,
- on réduit la vitesse de production de la partie (2) de la ligne de production en amont et la partie (3) de la ligne de production en aval par rapport à leur vitesse de production possible au maximum.
